Europäisches Patentamt

**European Patent Office**

Office européen des brevets

(11) Publication number: **0 087 333**
**A1**

## EUROPEAN PATENT APPLICATION

(21) Application number: **83400189.3**

(22) Date of filing: **27.01.83**

(51) Int. Cl.³: **G 01 S 5/08**

(30) Priority: **29.01.82 US 344242**

(43) Date of publication of application:
**31.08.83 Bulletin 83/35**

(84) Designated Contracting States:
**DE FR GB IT**

(71) Applicant: **AVIATION ELECTRIC Limited**
**200 Laurentian Boulevard**
**Montreal Quebec H4M 2L5(CA)**

(72) Inventor: **Petrov, Dimitri**
**4570 Draper**
**Montreal Quebec H4A 2P4(CA)**

(74) Representative: **Brullé, Jean et al,**
**Service Brevets Bendix 44, rue François 1er**
**F-75008 Paris(FR)**

(54) Vehicle heading reference system.

(57) The vehicle heading reference system disclosed receives signals from a navigation transmitter chain such as the Omega navigation transmitter chain, and/or the VLF transmitter chain (A,B,D) and processes the signals to determine the heading of the vehicle (CV) on which the heading reference system is located. To accomplish this, direction finding techniques are utilized to determine the direction from which signals ($b_1$, a, $b_2$) are received from each navigation transmitter (A,B,D). This information is processed to determine the heading of the vehicle (NCV) with respect to true north (CN).

FIG. 2

VEHICLE HEADING REFERENCE SYSTEM

This invention relates to Vehicle Heading Reference Systems.

In navigation many navigational aids are used, with some aids being used to check data obtained from other aids or to complement the shortcomings of the other aids. To derive heading information magnetic compasses, sun compasses, astro compasses and gyro compasses are commonly used. However, each of these has shortcomings. For example, a sun compass cannot be used at night and an astro compass requires clear skies. When navigating in the arctic or antarctic regions near the earth's magnetic poles, there are critical shortcomings with magnetic and gyro compasses. A magnetic compass is unreliable in such regions because the horizontal component of the earth's magnetic field is very small compared to the vertical component, and the steady state of the orientation of the magnetic needle is unreliable. Navigation maps covering polar regions, such as map 10200 published by the Canadian Hydrographic Service, indicate the areas where magnetic compasses are unreliable. A gyro compass can be used to find true north, but it is expensive, and requires a long settling time in the regions near the earth's rotational axis.

Thus, there is a need in the art for equipment that can reliably provide heading information when operating in the regions near the earth's magnetic poles.

The vehicle heading reference system described herein offers an electronic means for providing reliable heading information in the regions near the earth's magnetic poles where conventional forms of compasses have shortcomings or are totally unusable.

To provide this heading information I utilize equipment including a radio receiver which is tunable to the transmitters of one or more navigation transmitter chains. In this preferred embodiment of my invention the receiver is tunable to the transmitters of the Omega navigational system which, in conjunction with Omega receivers, provides position information throughout the world in a manner well known in the art. However, in my novel arrangement I do not utilize the transmissions from the Omega transmitters to obtain position information. Rather, I utilize a highly directional antenna, such as a direction finding antenna, coupled with other conventional direction finding system apparatus, such as shaft encoders and servo motors to rotate the antenna to first determine the direction from which transmissions from the Omega transmitters are being received. VLF international marine communication transmitters operating between 16.0 and 22.3 k Hz can also be used for this purpose. This information is then converted into angular information indicating the angles between the direction the vehicle on which my novel heading reference system is installed is heading and each of the Omega transmitters. This angular information is then processed as described hereinafter in the detailed description to provide heading information accurate within approximately plus or minus 2 degrees of true north. The heading reference provided by my novel system is provided independent of knowledge of the position of.the sun or stars and independent of the earth's magnetic field.

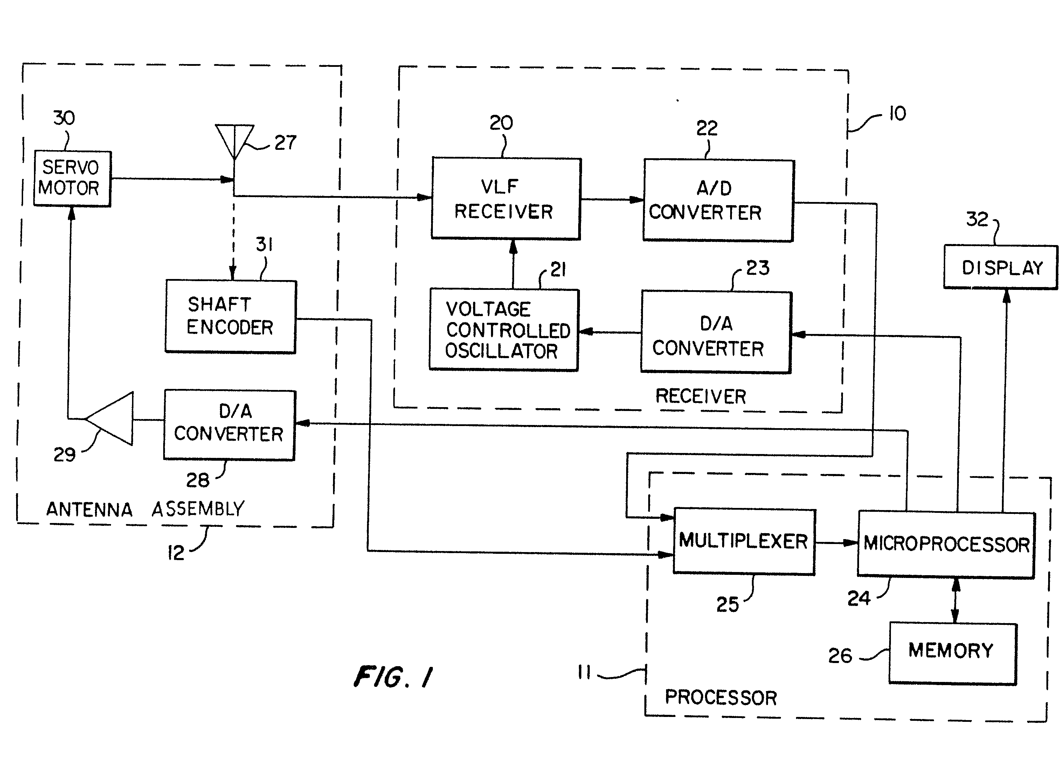

Figure 1 is a schematic block diagram showing my novel heading reference system;

Figure 2 is a diagrammatical illustration showing simplified planar geometric relationships between the locations of navigation transmitters at A, B and D and the vehicle on which my heading reference system is installed at C, and

Figure 3 is a diagrammatical illustration showing spherical geometric and trigonometric relationships between the location of navigation transmitters at A, B and D and the vehicle on which my heading reference system is installed at C, which relationships are utilized to derive the heading information output from my heading reference system.

Figure 4 is a block diagram of an alternative embodiment.

My novel vehicle heading system comprises three main elements: a receiver means 10, antenna assembly 12 and a processor means 11. The receiver means 10 comprises a low frequency and/or very low frequency receiver 20 which is tuned by the processor means 11 to selectively receive signals transmitted by selected ones of a number of navigation transmitters. In the preferred embodiment of my invention,·the navigation transmitters are of the Omega navigation transmitter chain, or the VLF transmitter chain or a combination of the two. The antenna assembly 12 comprises a highly directional antenna 27 of the type typically used for direction finding purposes, a servo loop system controlled by processor means 11 to align the directional antenna 27 to selected positions or to rotate said antenna 27

in a continuously rotating manner. To close the servo loop the antenna means 12 also comprises a shaft encoder 31 which provides a digital output to the processor means 11 indicating the position of the directional antenna 27 with respect to the lubber line of the vehicle on which my novel heading reference system is located. The processor means 11 comprises a microprocessor 24, a multiplexer 25 which is used to input signals from the receiver means 10 and the shaft encoder 31 of the antenna means 12 to microprocessor 24, and a memory 26 for storing data received from receiver means 10 and shaft encoder 31 of antenna means 12.

More particularly, in this embodiment of my invention, the radio receiver 20 of my receiver means 10 is very low frequency (VLF) receiver 20, well known in the art and designed to receive signals from the Omega navigation system transmitters as well as VLF transmitters. This VLF receiver 20 is modified to be tuned by a voltage controlled oscillator (VCO) 21 driven by digital-to-analog converter 23 under control of the microprocessor 24. Microprocessor 24 includes an internal memory (not shown) in which are stored digital numbers used to tune VLF receiver 20 to receive signals from Omega and VLF transmitters. In a preselected, arbitrary or a sequential order, microprocessor 24 reads these binary numbers out of its internal memory one at a time and applies them to digital-to-analog converter 23 within receiver means 10. Digital-to-analog converter 23 provides a discrete analog output voltage for each binary number applied to its input and the discrete output voltage is applied to voltage controlled oscillator 21 which changes frequency in response thereto in a manner well known in the art. Voltage controlled oscillator 21 is the local oscillator of VLF receiver 20 and thereby tunes receiver 20 to receive the signals transmitted by the selected Omega or VLF transmitters indicated by the binary number that microprocessor 24 has read out of its memory and applied to receiver means 10. In this manner receiver means 10 is controlled by processor means 11 to receive signals transmitted from selected ones of the Omega navigation system or VLF transmitters.

The analog signal received from an Omega or VLF transmitter at a particular moment in time is periodically sampled and its amplitude is digitized by analog-to-digital converter 22 under control of clock 33 which periodically enables same and the digitized signal is applied via a multiplexer 25, which operates in a manner well known in the art, to microprocessor 24 which stores same in memory 26 to be processed as described further in this specification.

As signals are being received and digitized by receiver means 10 under

4

control of microprocessor 24, this microprocessor is also applying binary numbers to digital-to-analog convertor 28 within antenna assembly 12. Digital-to-analog converter 28 converts these binary numbers to analog voltages which are amplified by amplifer 29 to drive servo motor 30 and thereby rotate directional antenna 27. Alternatively, these binary numbers may be used without conversion to drive a stepping motor. The servo loop is completed by the operation of shaft encoder 31 which, in a manner well known in the art, provides a binary number output indicating the position of directional antenna 27. More particularly, shaft encoder 31 indicates the position of directional antenna 27 with respect to the lubber line of the vehicle or craft on which my novel heading reference system is located.

As directional antenna 27 is rotated to approach and then goes past the bearing of one of the selected Omega or VLF transmitters, the amplitude of the received signal increases to a maximum and then as antenna 27 is further rotated so that it does not point directly at an Omega or VLF transmitter, the amplitude of the signal falls off toward zero. This peaking and nulling of signals received from each Omega or VLF transmitter is sensed by microprocessor 24 by way of the binary numbers output from analog-to-digital converter 22. Microprocessor 24 correlates these peaks and nulls of the received signals from each of the Omega or VLF transmitters with the binary numbers received from shaft encoder 31 to identify the direction of each transmitter with respect to the lubber line of the vehicle or craft upon which my heading reference system is located. Thereafter, microprocessor 24 knows at which angles with respect to the lubber line of the craft Omega or VLF transmitter signals will be received.

Microprocessor 24 also utilizes an averaging technique to average shaft encoder information stored in memory 26 for the peaks and nulls of the received signals. This averaging technique cancels the effect of noise varying the amplitude of received Omega or VLF signals.

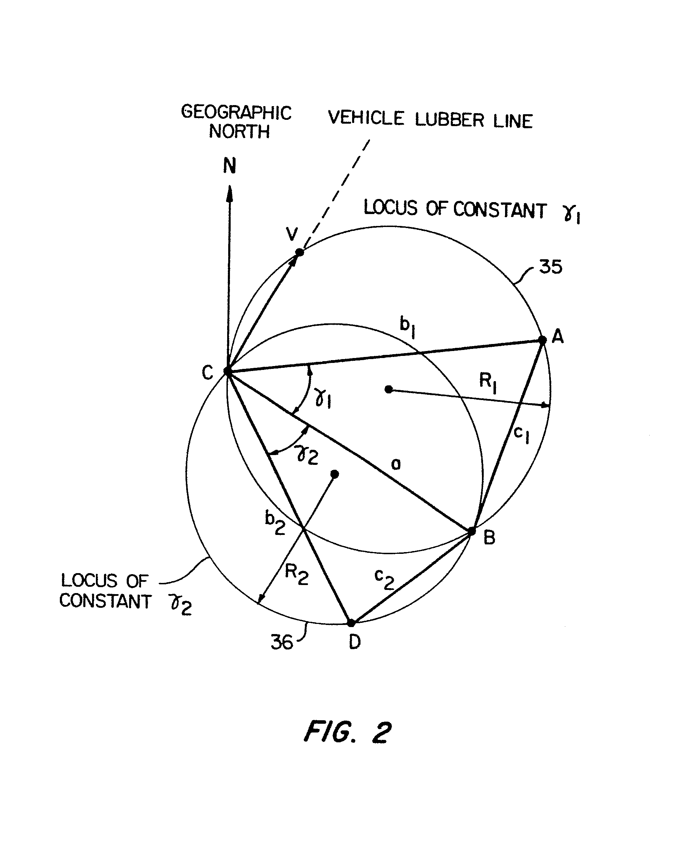

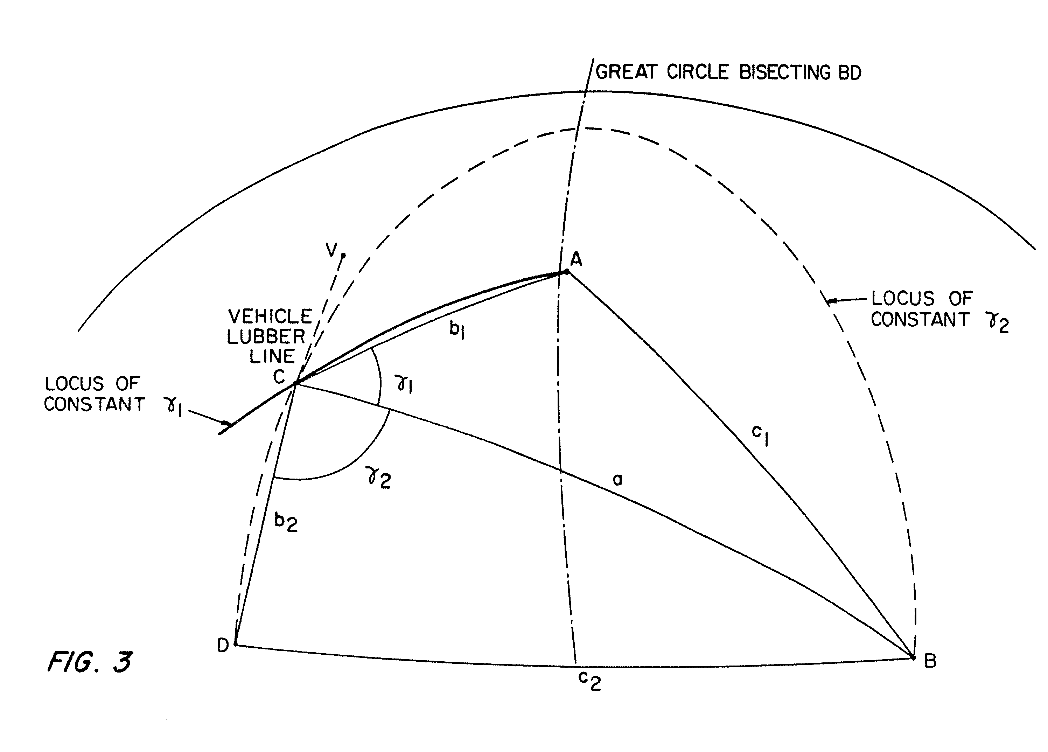

Once microprocessor 24 has completed the above described operation and has closely identified the direction of each Omega transmitter as an angle with respect to the lubber line of the vehicle or craft, microprocessor 24 then progresses to its next step of operation wherein it calculates the heading of the craft or vehicle upon which the heading reference system is located. For ease of understanding this is first described with reference to Figure 2 which explains the determination of vehicle heading assuming that vehicle location C and radio transmitter locations A, B and D are in a flat plane. Thereafter, the actual system operation on the earth's spheroid is described with reference to Figure 3. In Figure 2 is shown a simple plane geometrical diagram showing an unknown position C at which is located the vehicle or craft. Points A, B and D represent the locations of three radio transmitters with respect to point C. With the information previously determined by microprocessor 24, indicating the direction of each radio transmitter stations at points A, B and D with respect to the vehicle at point C, microprocessor 24 can easily calculate the angles VCA, VCB and VCD between the vehicle lubber line and each of the radio transmitters at points A, B and D, ACB defines the angle $\gamma_1$ and BCD defines the angle $\gamma_2$. AB is the distance $c_1$, BD is the distance $c_2$, CA is the distance $b_1$, CB is the distance a, and CD is the distance $b_2$. $R_1$ and $R_2$ are radii of circumscribed circles corresponding to triangles ABC and BCD and are claculated from equations 1 and 2. $\angle$ NCV defines the heading of the vehicle at point C. $\gamma_1 = \angle VCB - \angle VCA$ and $\gamma_2 = \angle VCD - \angle VCB$.

The locus of points C such that $\gamma_1$ and $c_1$ are constant is an arc of circle 35 whose radius $R_1$ is defined by equation (1). Similarly the locus of points C such that $\gamma_2$ and $c_2$ are constant is an arc of circle 36 whose radius $R_2$ is defined by equation (2).

$$2 R_1 = c_1 \sin \gamma_1 \quad (1) \qquad 2 R_2 = c_2 \sin \gamma_2 \quad (2)$$

The two aforementioned arcs of circles 35 and 36 intersect at points C and B, and this information allows the determination of the location of the vehicle or craft at point C as well as the heading of the vehicle or craft with respect to the known reference directions CA, CB and CD. The intersection of the two arcs can be easily determined using methods of plane analytical geometry. The equation of the circle whose radius is $R_1$ and whose center coordinates are $h_1$ and $k_1$ is

$$(x - h_1)^2 + (y - k_1)^2 = R_1^2 \quad (3)$$

The center coordinates $h_1$, $k_1$ can be determined by substituting first the coordinates $x_1$, $y_1$ of point A and subsequently the coordinates $x_2$, $y_2$ of point B into equation (3). This procedure yields two equations in two unknowns $h_1$ and $k_1$:

$$(x_1 - h_1)^2 + (y_1 - k_1)^2 = R_1^2 \quad (4)$$

$$(x_2 - h_1)^2 + (y_2 - k_1)^2 = R_1^2 \quad (5)$$

The equations can then be solved for $h_1$ and $k_1$. Equation (3) of the circle passing through A, B and C is thereby derived. Using the same method the equation of the circle of radius $R_2$ passing through B $(x_2, y_2)$ and

D $(x_4, y_4)$ whose center coordinates are $h_2$ and $k_2$ can be derived:

$$(x - h_2)^2 + (y - k_2)^2 = R_2^2 \quad (6)$$

Equations (3) and (6) are quadratic with two unknowns x and y and their solution yields $x_2$, $y_2$ the known coordinates of B, and $x_3$, $y_3$ the unknown coordinates of C. This procedure completes the colution of the plane triangles CAB and CBD. It determines the position of the vehicle at C, the angle between the vehicle lubber line and the reference directions CA, CB and CD. Vehicle heading with respect to grid north can be easily calculated from this information.

The colution for the real case in spherical trigonometry will now be derived. Refer to Figure 3. In this case CAB and CBD are spherical triangles and by analogy with the problem in plane geometry the vehicle position and heading can be determined providing the intersection of appropriate loci, which were circles in plane geometry, can be found. The fundamental question which has to be answered in spherical trigonometry with reference to Figure 3 is: what is the locus of C such that $\gamma_1$ and AB equal $c_1$ remain constant?

One is tempted to assume that it is the small circle passing through ABC, however this assumption proved to be wrong and additional mathematical analysis led to the conclusion that the locus is a curve on the earth's sphere which is not planar and which is symmetrical about the great circle which bisects BD. The following mathematical method was derived which allows a point by point plotting of the locus:

Consider the spherical triangle ABC and apply to it the theorem of cosines of the sides frequently used in spherical trigonometry:

$$\cos c_1 = \cos a \cos b_1 + \sin a \sin b_1 \cos \gamma_1 \quad (7)$$

In this equation the unknowns are a and $b_1$ and a particular solution is found for $a = b_1$, i.e. the spherical triangle is isosceles and C is located on the great circle which bisects AB. Equation (7) becomes as shown in equation (8).

$$\cos c_1 = \cos^2 a + \sin^2 a \cos \gamma_1 \quad (8)$$

$$= 1/2 \ (1 + \cos 2a) + 1/2 \ (1 - \cos 2a) \cos \gamma_1$$

whence:

$$a = 1/2 \ \text{arc} \cos \left[ (2 \cos c_1 - 1 - \cos \gamma_1)/(1 - \cos \gamma_1) \right] \quad (9)$$

In order to find any other point on the locus it suffices to select, for instance, $b_1$ as the independent variable and a as dependent variable and to solve equation (7).

Divide this equation by $\cos b_1$:

$$\cos a + \sin a \cos \gamma_1 (\sin b_1/\cos b_1) = \cos c_1/\cos b_1 \qquad (10)$$

$$\text{Let } \cos \gamma_1 (\sin b_1/\cos b_1) = \tan \lambda \qquad (11)$$

Then equation (7) becomes:

$$\cos a + \sin a \tan \lambda = m \qquad (12)$$

Where $m = \cos c_1/\cos b_1$ is a known constant. Equation (12) can be re-written:

$$\cos a \cos \eta + \sin a \sin \eta = m \cos \lambda \qquad (13)$$

$$\cos (a - \eta) = m \cos \lambda$$

$$a = \text{arc cos } (m \cos \eta) + \lambda \qquad (14)$$

Thus for each value of $b_1$ there is a corresponding value given by equation (14) so that the locus of C such that $\gamma_1$ and $c_1$ are constant can be plotted point by point on the earth's sphere. Using this method the locus of C such that $\gamma_2$ and $c_2$ are constant can also be found. For a given area in the Arctic a family of constant $\gamma_1$ and $\gamma_2$ loci can be established such that their intersections define without ambiguity the coordinates of C as well as the directions with respect to north of CA, CB and CD.

One skilled in the programming art can write a program to solve the equations given above to find the heading information. The accuracy of this method is estimated to be $\pm$ 2 degrees, which is satisfactory considering that none of the previously identified types of compasses can do so in the regions near the earth's magnetic poles.

With the high speeds of modern microprocessors, calculations for the equations given above to determine the vehicle heading may be made in small fractions of a second. When this is done at a rate in excess of ten times a second and the results averaged by microprocessor 24, the heading of craft C is determined and output to the equipment operator via display 32.

In an alternative embodiment of the invention, the vehicle or craft heading calculated by microprocessor 24 may be used to update a low drift directional gyroscope in a manner well known in the art, and a vehicle heading with respect to north is displayed.

As would be obvious to those skilled in the art, other embodiments of the invention may also be derived. For instance, it is well known that excellent resolution is achieved in determining bearing by radio direction finding when the antenna is rotated to align with a null of signal strength. Furthermore, rather than using a single movable directional antenna, two orthogonal loop or ferrite loop antennas may be utilized. In this alternative embodiment digital receiver means 10 and antenna means 12 must be changed because these antennas do not have to be rotated.

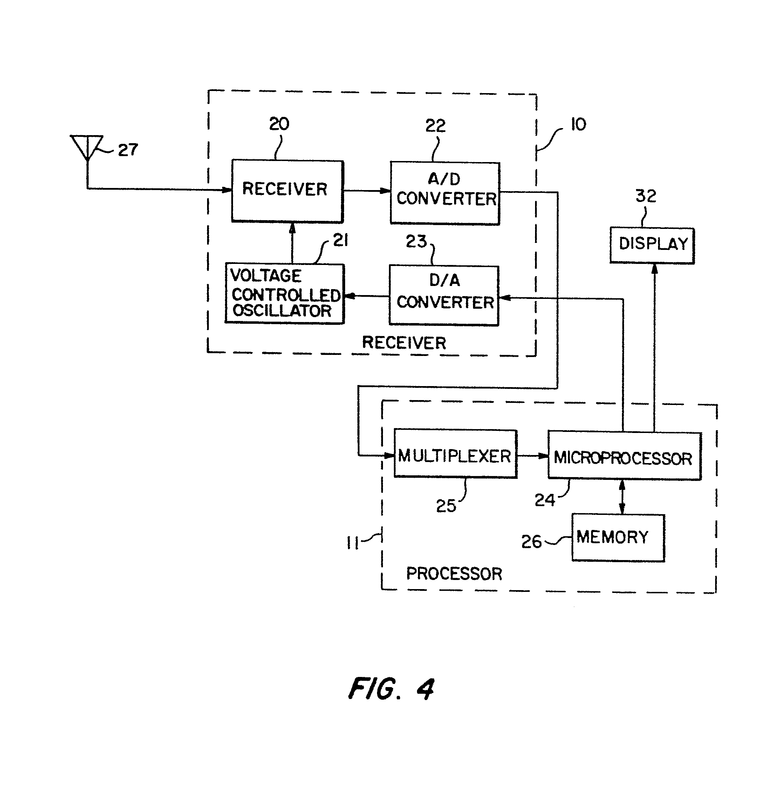

In Figure 4 is shown a block diagram of this alternative embodiment of the invention wherein two nonrotating orthog-nal ferrite loop antennas are used to derive the bearing information utilized in practicing the invention. As stated above, receiver means 10 and antenna means 12 must be changed. More specifically, elements 28, 29, 30 and 31 which are required with a rotating antenna, and not required for a nonrotating antenna, are deleted. The remainder of the circuitry is the same and has the same purposes and functions. Orthogonal antennas have long been utilized to provide bearing information in the direction finding art as may be seen in U.S. Patents 4,135,191; 3,031,663 and 2,684,480.

Orthogonal loop antennas have also been used with Omega receivers such as the Bendix ONS-20 sold to the U.S. Air Force and the ONS-25 for commercial aircraft. Typically the amplitude of the signal received by each of the two orthogonal antennas is measured and it corresponds to sine and cosine of the angle of the bearing to the transmitter with respect of the antennas. The tangent of the angle is the value of the measured sine amplitude divided by the measured cosine amplitude from the two antennas and the angle or bearing to the transmitter is obtained. With bearing information to three transmitters the heading is derived as previously described.

## CLAIMS

1. A heading reference system for use on a vehicle of any type and receiving signals from a plurality of transmitters characterized by antenna apparatus (12). receiver means (10) functioning with said antenna apparatus (12) for receiving signals from at least three of said transmitters and providing first signals, and processor means (11) responsive to said first signals to derive heading information indicating the direction said vehicle is heading.

2. Apparatus receiving signals from a plurality of transmitters for indicating the direction of a vehicle containing said apparatus is heading comprising : antenna apparatus (12), receiver means (10) functioning with said antenna apparatus (12) for receiving signals from said plurality of transmitters and providing first signals representing the amplitude of said received signals, and processor means (11) responsive to said first signals to derive heading information indicating the direction in which said vehicle is heading.

3. The invention in accordance with claim 1 further characterized by : said processor means (11) applying first individual binary numbers indicating ones of said transmitters to said receiver means (10) ; the receiver means further including a first digital-to-analog converter (23) for converting said first binary number into analog-voltages, and generate frequencies that ture said receiver means (10) to the frequencies of one of said transmitters.

4. The invention in accordance with claim 3 further characterized by : means (10) further including analog-to-digital converter means (22) for converting the signal received by said receiver means (10) into first digitized signals which are said first signals.

5. The invention in accordance with claim 3, further characterized by said antenna apparatus (12) including : a directional antenna (27) and a shaft encoder (31) providing second digitized signals indicating the position of said directional antenna (27).

6. The invention in accordance with claim 5, further characterized by said antenna apparatus (12) further including : a second digital-to-analog converter (28) responsive to second binary number outputs from said processor means (11) to generate drive signals ; and a motor (30) responsive to said drive signals for rotating said directional antenna (27) to receive the signals from said transmitting stations.

**0087333**

7. Heading reference apparatus used on a vehicle and receiving signals from a plurality of transmitters for indicating the direction in which said vehicle is heading characterized by : a directional antenna apparatus (12) rotated to receive signals from ones of such a plurality of transmitters and for providing a first output signal indicating the position of said antenna ; receiver means (10) tuned to the frequency of ones of said transmitters and cooperating with said directional antenna apparatus (12) to receive the signals therefrom and provide second output signals representing the amplitude of said received signals, and processor means (11) being responsive to both said first and second output signals to indicate the direction said vehicle is heading.

8. The invention in accordance with claim 7 further characterized by : output means (32) via which said processor means (11) indicates the heading of said vehicle.

9. The invention in accordance with claim 7, further characterized by said directional antenna apparatus including : a directional antenna (27) ; and a shaft encoder for providing said first output signal, indicating the direction said directional antenna means is pointing, to said processor means.

10. The invention in accordance with claim 9, further characterized by : said processor means (11) controlling the rotation of the directional antenna of said directional antenna apparatus (12) ; said directional antenna apparatus (12) including a motor means (30) for rotating said directional antenna ; and said directional antenna apparatus (12) including a digital-to-analog converter (28) responsive to binary numbers output from said processor means (11) to generate signals used to drive said motor means (30), said motor means (30) along with said digital-to-analog converter means (28), said shaft encoder (31) and said processor means (11) making up a servo control loop, and from said first and said second output signals said processor means (11) knows the direction of said navigation transmitters with respect to said vehicle and then determines the heading of said vehicle.

11. The invention in accordance with claim 7, further characterized by said receiver means including : a voltage controlled oscillator (21), the frequency of which determines the frequency of reception of said receiver means (10) ; and a digital-to-analog converter (23), the input of said digital-to-analog converter (23) being connected to said processor means (11) and having its output connected to the input of said voltage controlled oscillator (21), and binary numbers are applied by said processor means (11) to said digital-to-analog converter (23) which thereby causes tuning of said receiver means to the frequency of ones of said navigation transmitters.

12. The invention in accordance with claim 11, further characterized by said receiver means (10) including : analog-to-digital converter means (22) for converting said received navigation transmitter signals into binary numbers which are said second output signals.

13. The invention in accordance with claim 2, further characterized by said processor means (11) applying first individual binary numbers indicating ones of said transmitters to said receiver means (10) ; the receiver means (10) including a first digital-to-analog converter for converting said first binary numbers into analog voltages and a voltage controlled oscillator (21) responsive to said analog voltages to generate frequencies that tune said receiver means (10) to the frequencies of ones of said transmitters.

14. The invention in accordance with claim 13, further characterized by said receiver means including analog-to-digital converter means (22) for converting the signal received by said receiver (10) into first digitized signals which are said first signals.

15. The invention in accordance with claim 4, further characterized by said processor means including a microprocessor (24) which derives said heading information responsive to said first signals, and a multiplexer (25) for applying said first signals to said microprocessor (24).

16. The invention in accordance with claim 14, further characterized by said processor means including a microprocessor (24) which derives said heading information responsive to said first signals ; and a multiplexer (25) for applying said first signals to said microprocessor (24).

17. The invention in accordance with claim 15, further characterized by display means (32) under control of said microprocessor (24) to provide an output indicating the heading of said vehicle.

18. The invention in accordance with claim 16 further characterized by display means (32) under control of said microprocessor (24) to provide an output indicating the heading of said vehicle.

FIG. 1

0087333

FIG. 2

FIG. 3

GREAT CIRCLE BISECTING BD

LOCUS OF CONSTANT $\gamma_2$

VEHICLE LUBBER LINE

LOCUS OF CONSTANT $\gamma_1$

$b_1$

C

$\gamma_1$

$\gamma_2$

$b_2$

A

$c_1$

a

D

$c_2$

B

V

3 / 4

0087333

FIG. 4

0087333
Application number

European Patent
Office

EUROPEAN SEARCH REPORT

EP 83 40 0189

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | GB-A-2 047 038 (MARCONI)<br>* Figure 1 * | 1,3 | G 01 S 5/08 |
| | --- | | |
| A | ELEKTRISCHES NACHRICHTENWESEN, vol. 54, no. 2, 1979, M.A. RAMBAUT "Ein neuer Schiffspeiler", pages 160-165<br>* Page 160, figure 1; page 162, figure 4 * | 1 | |
| | --- | | |
| A | US-A-3 289 207 (M. LENT)<br>* Figures 2, 7 * | 6 | |
| | --- | | |
| A | GB-A-2 044 033 (MARCONI)<br><br>* Figure 1 * | | |
| | --- | | TECHNICAL FIELDS SEARCHED (Int. Cl. ³) |
| A | US-A-3 727 226 (E.W. BUSH)<br><br>* Figure 1 * | | G 01 S 3/00<br>G 01 S 5/00 |
| | --- | | |
| A | US-A-3 132 341 (R.A. FRYKLUND)<br><br>* Figure 1 * | | |
| | ---                    -/- | | |

The present search report has been drawn up for all claims

| Place of search | Date of completion of the search | Examiner |
|---|---|---|
| BERLIN | 14-04-1983 | BREUSING J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

## DOCUMENTS CONSIDERED TO BE RELEVANT

Page 2

| Category | Citation of document with indication. where appropriate, of relevant passages | Relevant to claim | CLASSIFICATION OF THE APPLICATION (Int. Cl. 3) |
|---|---|---|---|
| A | IEEE TRANSACTIONS ON AEROSPACE AND ELECTRONIC SYSTEMS, vol. AES-8, no. 2, March 1972, J.C. HUNG et al. "Two new landmark navigation methods", pages 229-235 <br> * Page 230, column 2 and the following * <br><br> ----- | | |
| | | | TECHNICAL FIELDS SEARCHED (Int. Cl. 3) |

The present search report has been drawn up for all claims

| Place of search <br> BERLIN | Date of completion of the search <br> 14-04-1983 | Examiner <br> BREUSING J |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons

& : member of the same patent family, corresponding document

EPO Form 1503 03 82